# EUROPÄISCHE PATENTSCHRIFT

(11) **EP 1 505 310 B1**
(45) Veröffentlichungstag und Bekanntmachung des Hinweises auf die Patenterteilung: **08.08.2012**
(21) Anmeldenummer: 04014925.4
(22) Anmeldetag: 25.06.2004
(51) Int. Cl.: F16D 69/02, C04B 35/83

(54) **Verfahren zur Herstellung eines auf einem flächigen Carbonfaser-Gewebe basierenden Reibmaterials für Nassreibelemente und nach dem Verfahren hergestelltes Reibmaterial**
Method of making a carbon fiber based woven friction material for wet friction elements , and material made according to this method
Procédé de fabrication d'un matériau de friction à base de tissu de fibres de carbone et matériau obtenu selon ce procédé

(30) Priorität: 29.07.2003 DE 10334881
(43) Veröffentlichungstag der Anmeldung: 09.02.2005
(73) Patentinhaber: SGL Carbon SE, 65203 Wiesbaden (DE)
(72) Erfinder: Gruber, Udo, 86356 Neusäss (DE); Grasser, Sebastian, 86316 Friedberg (DE); Pfitzmaier, Eugen, 86672 Thierhaupten (DE); Bode, Reiner, 86477 Aindling (DE); Hochegger, Gernot, 1090 Wien (AT)

(56) Entgegenhaltungen:
- US-A- 5 858 511
- US-A- 5 895 716
- US-A- 5 952 249
- US-A1- 2004 147 192

## Beschreibung

### Stand der Technik

Die Erfindung betrifft ein Verfahren zur Herstellung eines auf einem flächigen Carbonfaser-Gewebe basierenden Reibmaterials für Nassreibelemente wie Kupplungsbeläge oder Synchronringbeläge, gemäß dem Oberbegriff von Anspruch 1 sowie ein nach dem Verfahren hergestelltes Reibmaterial gemäß Anspruch 16.

Bei solchen Nassreibelementen dient ein Nassmedium, beispielsweise Öl, zur Abfuhr der durch den Reibungskontakt entstehenden Wärme von den Reiboberflächen der Reibpartner. Ein gattungsgemäßes Verfahren ist aus der US 5 662 993 bekannt und betrifft Reibmaterial aus harzimprägniertem Gewebe, welches aus carbonisierten Fasern gewoben ist.

Ein solches Gewebe wird entweder aus Garnen hergestellt, die aus bereits carbonisierten Fasern bestehen, oder es wird zunächst ein Gewebe aus einem Garn aus Polyacrylnitril-Fasern hergestellt, das anschließend als Ganzes carbonisiert wird. Das Gewebe wird mit Harzen imprägniert, so dass die Zwischenräume zwischen den einzelnen Carbonfasersträngen in den Garnen, aus denen das Gewebe aufgebaut ist, teilweise durch das Harz gefüllt sind. Dieses Harz kann durch Pyrolyse teilweise oder vollständig in amorphen Kohlenstoff umgewandelt werden.

Ein solches Gewebe weist eine Textur/Oberflächenmorphologie auf, welche Reservoire und Abflusswege für das Öl zur Verfügung stellt. Das Gewebe umfasst einerseits offene Zwischenräume zwischen den einzelnen Fäden des Gewebes (Makrotextur) und andererseits Poren und Lücken zwischen den einzelnen Fasersträngen innerhalb der Fäden (Mikrotextur). Dann kann das Reibmaterial von Öl durchspült werden, um die auf das Öl übertragene Reibungswärme abzutransportieren. Außerdem fördert eine zu glatte, ebene Oberfläche die Ausbildung eines für den Reibschluss unerwünschten hydrodynamischen Schmierfilms.

Während der Imprägnierung des Gewebes mit dem Harz kann es notwendig sein, überschüssiges Harz zu entfernen. Dabei soll gemäß der eingangs genannten Schrift eine Druckanwendung ausdrücklich vermieden werden, um die Mikro- und Makrotextur des Reibmaterials nicht zu zerstören. Die Mikrotextur und die Makrotextur des Reibmaterials sind jedoch in gewissen Maße auch nachteilig, denn sie ermöglichen im Moment des Kontakts der Nassreibpartner, dass das Öl infolge des Kontaktdrucks von der Oberfläche weg ins Innere des Reibmaterials ausweicht, von wo aus es aufgrund des relativ hohen Strömungswiderstands der durch die Mikrotextur und die Makrotextur gebildeten Strömungswege nur schwer wieder aus dem Reibmaterial heraus abgeführt werden kann, um die mit ihm transportierte Wärme in den Teil des. Ölkreislaufs einzubringen, welcher außerhalb der Nassreibelemente liegt, beispielsweise in ein Kupplungs- oder Getriebegehäuse. Günstiger wäre es demgegenüber, wenn das Öl nicht ausschließlich in das Innere der Nassreibelemente ausweicht, sondern zumindest ein Teil des Öls entlang der Oberfläche der Nassreibelemente in einer gewünschten Flussrichtung abfließen und zugleich neues oder bereits abgekühltes Öl nachfließen wurde.

Das aus der US 5 662 993 bekannte Gewebe hat eine Flechtstruktur, bei welchem die Plateaus der Schussfäden und der Kettfäden gleich hoch aus dem Gewebe herausragen. Es entsteht ein sog. leinwandbindiges Gewebe, mit einer schachbrettartigen Anordnung von Bindungspunkten mit oben liegendem Kettfaden und Bindungspunkten mit oben liegendem Schussfaden. Die bekannte Anordnung von schachbrettartig angeordneten Bindungspunkten behindert jedoch einen Ölfluss entlang der Oberfläche der Nassreibelemente.

In US 5 858 511 A wird der Ölabfluss auf der Oberfläche der Nassreibelemente durch Ausformen von Ölabflusskanälen durch ein Preßverfahren erreicht.

In US 5 895 716 A werden solche Ölabflusskanäle in einem Fräsverfahren aus dem pyrolysierten Bauteil geformt.

In US 5 952 249 A ist der Abfluss durch das Reibelement bei Nassreibanwendungen als wesentlich dargestellt. Technische Merkmale zur Verbesserung des Ölflusses werden jedoch nicht gelehrt.

Die US 2004/14719 A betrifft ein Verfahren zur Erhöhung des Reibungskoeffizienten des Reibelements. Technische Merkmale für einen verbesserten Ölabfluss auf der Reiboberfläche werden jedoch nicht gelehrt.

Die WO 01/44678 A lehrt, zum verbesserten Ölabfluss, die Oberflächenpoxosität durch Verwendung einer Saugfolie, durch Bürsten, Schleifen oder Sandstrahlen.

### Aufgabe der Erfindung

Die Aufgabe der Erfindung besteht demgegenüber darin, ein Verfahren der eingangs erwähnten Art derart weiter zu entwickeln, dass ein Reibmaterial erzeugt werden kann, welches einerseits günstige Reibeigenschaften und eine gute Wärmeabfuhr unter Einsatzbedingungen gewährleistet und andererseits eine hohe mechanische Steifigkeit und Dauerfestigkeit besitzt.

Die Aufgabe wird durch die kennzeichnenden Merkmale von Anspruch 1 gelöst.

### Vorteile der Erfindung

Durch das Verpressen des Prepregs wird die Kompressiblität des Reibmaterials verringert, so dass es in der späteren Reibanwendung nahezu keine Kompressiblitätsreserven mehr aufweist und folglich seine Abmessungen formstabil konstant beibehält. Gleichzeitig wird die Steifigkeit des Reibmaterials erhöht. Weiterhin lässt sich durch den Pressvorgang die gewünschte Dicke des Reibmaterials mit engen Toleranzen genau einstellen. Anderenfalls müsste das Reibmaterial durch mechanische Oberflächenbearbeitung, beispielsweise Schleifen, auf die gewünschte Dicke gebracht werden. Bei einem solchen Schleifprozess werden jedoch die an der Oberfläche verlaufenden Fasern und Fäden beschädigt, so dass die Integrität des Gewebes beeinträchtigt wird. Außerdem bewirkt der Pressvorgang eine weitere Verdichtung des Materials, so dass dessen Permeabilität abnimmt. Durch den Fluss des Binders unter der Druckbeaufschlagung wird die Verteilung des Harzes vergleichmäßigt, so dass der Aufbau des Reibmaterials homogener wird. Außerdem bewirkt der unter Druck stattfindende Binderfluss einen zumindest teilweisen Verschluss der Poren bzw. eine Verkleinerung der Poren, was einer Materialverdichtung gleichkommt. Durch die genannten Maßnahmen wird der Ölabfluss ins Materialinnere verringert und derjenige entlang der Materialoberfläche gefördert, was in einer verbesserten Wärmeabfuhr resultiert.

Weitere Einzelheiten, Merkmale und Vorteile der Erfindung gehen aus der folgenden detaillierten Beschreibung hervor.

### Zeichnungen

In den Zeichnungen zeigt
- Fig.1: ein Ausgangsgewebe für das erfindungsgemäße Verfahren gemäß einer bevorzugten Ausführungsform in 10-facher Vergrößerung;
- Fig.2: das Ausgangsgewebe von Fig.1 in 34-facher Vergrößerung;
- Fig.3: eine schematische Darstellung des Aufbaus verschiedener Gewebearten;
- Fig.4: eine schematische Darstellung eines Pressvorgangs des mit Harz imprägnierten Ausgangsgewebes;
- Fig.5: ein erfindungsgemäßes Reibmaterial gemäß einer bevorzugten Ausführungsform in 10-facher Vergrößerung;
- Fig.6: einen Querschnitt durch das erfindungsgemäße Reibmaterial von Fig.5 in 120-facher Vergrößerung;

Als Ausgangsmaterial für das erfindungsgemäße Reibmaterial sind alle Gewebe bevorzugt geeignet, die eine ausgeprägte Riefenstruktur aufweisen. Ein typisches Beispiel hierfür sind Gewebe mit Köperbindung. Charakteristisch für die Köperbindung sind diagonal zu den Kettund Schussfäden über die Gewebefläche laufende Bindungslinien. So hergestellte Gewebe sind durch eine durchgehende, beispielsweise diagonale Streifung aus tiefer liegenden Bereichen, welche im folgenden als Riefen oder kanalartige Vertiefungen bezeichnet werden, und erhöhten Bereichen gekennzeichnet, welche im folgenden als Grate bezeichnet werden. In vorteilhafter Weise kann dann in den Ölkanäle bildenden Riefen befindliches Öl ungehindert entlang der Oberfläche abfließen und folglich Reibungswärme abtransportieren, wobei die Riefen durch das beispielsweise im Kupplungsgehäuse oder im Getriebegehäuse enthaltene Öl wieder aufgefüllt werden. Die kanalartigen Riefen oder Vertiefungen können insbesondere beim Befestigen des Reibmaterials auf dem Substrat, beispielsweise einer Kupplungsscheibe oder einem Synchronring, in jeglicher Richtung ausgerichtet werden, folglich auch in einer ausgezeichneten Richtung, in welcher ein Ölzu- und -abfluss von und zu benachbarten Bereichen besonders einfach ist. Insbesondere können die kanalartigen Riefen oder Vertiefungen nach einer vorgegebenen Ölströmung innerhalb eines Kupplungsgehäuses oder eines Getriebegehäuses ausgerichtet werden.

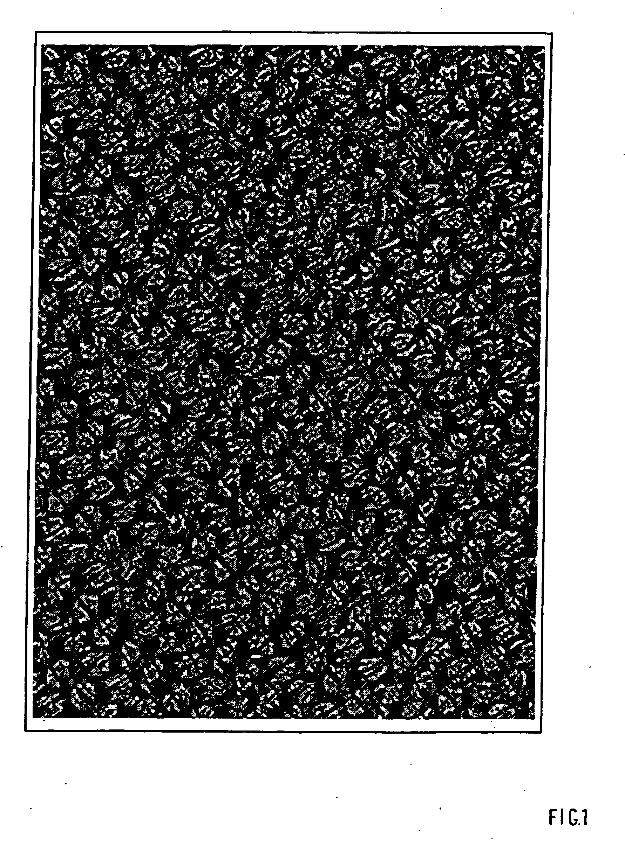

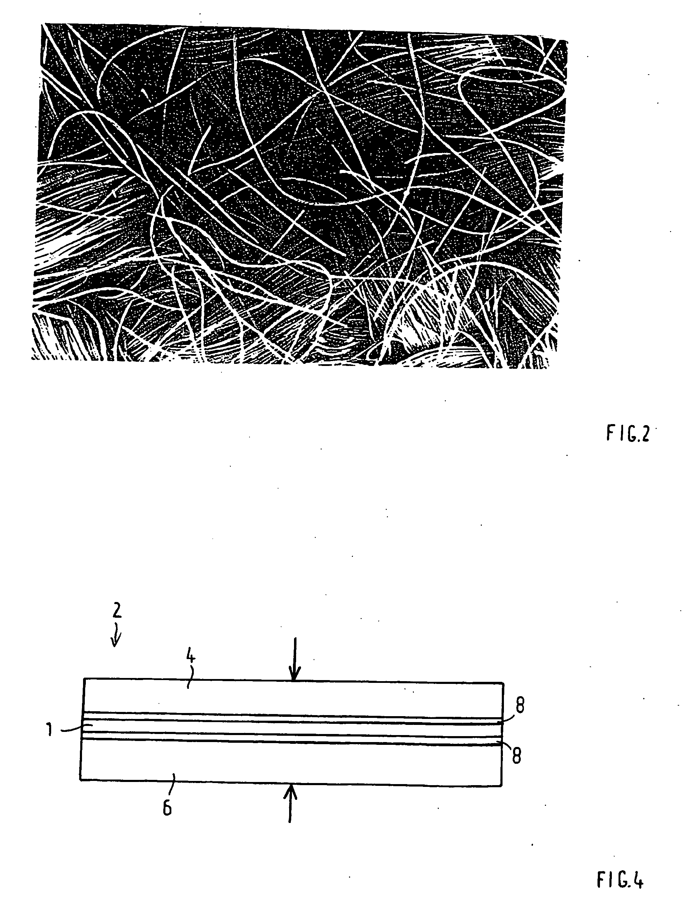

Ein bevorzugtes Beispiel für ein geeignetes Ausgangsgewebe zur Herstellung erfindungsgemäßer Reibmaterialien ist in den Fig.1 und 2 dargestellt. Es handelt sich um ein Gewebe der Bindungsart Köper 2/2 mit je 130 Kett- und Schussfäden auf 10 cm, wobei die Fäden Zwirnfäden mit einer Fadenfeinheit von 143 tex und einem Flächengewicht von 400 g/cm² sind. Während in Fig.1 die diagonale Strukturierung des Gewebes deutlich erkennbar ist, zeigt Fig.2 einen kleineren Ausschnitt aus dem Gewebe mit erkennbaren einzelnen Bindungspunkten, Vertiefungen bzw. kleinen Öffnungen zwischen den einzelnen Fäden und Poren zwischen den einzelnen Fasersträngen in den Fäden.

In einer besonders bevorzugten Variante wird ein einseitiges Gewebe verwendet, d.h. die Grat- und Riefenstruktur ist auf einer Seite des Gewebes stärker ausgeprägt als auf der anderen. Die stärker strukturierte Seite des Gewebes wird dann als Reiboberfläche vorgesehen, während die glattere Seite für die Klebeverbindung mit dem Substrat besser geeignet ist, beispielsweise mit einem Kupplungs- oder Synchronringbelagträger, da sie eine größere und geschlossenere Adhäsionsfläche aufweist als die Oberfläche mit der Riefen- und Gratstruktur. Ein Beispiel für solche Gewebe mit einer strukturierten und einer glatten Oberfläche ist Gewebe mit der Bindungsart Köper 2/1.

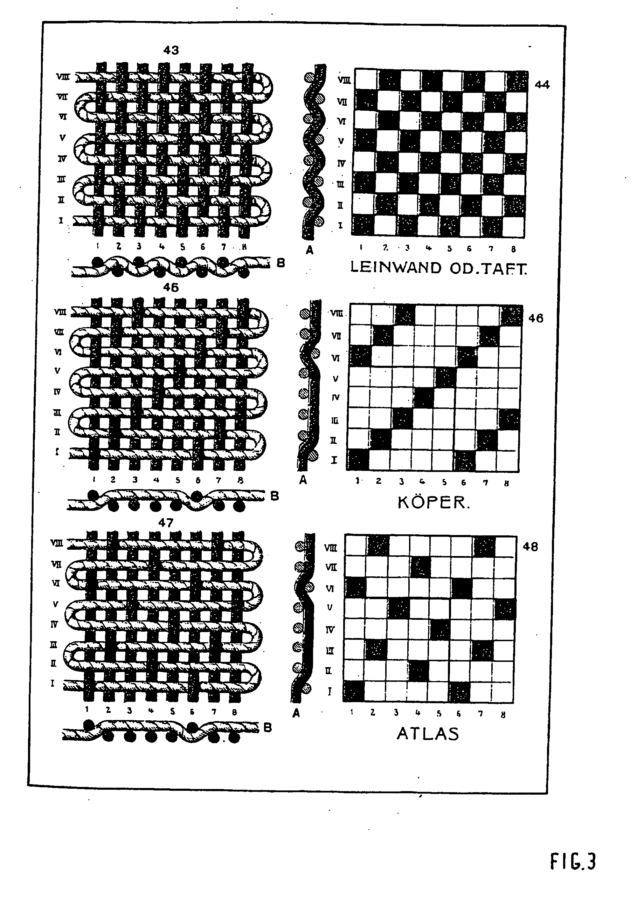

Fig.3 zeigt schematisch den Aufbau von Geweben mit verschiedenen Grundbindungstypen. Im Vergleich zu Köpergewebe mit relativ breiten, durchgezogenen Riefen weist leinwandbindiges Gewebe keine diagonal durchlaufenden Riefen auf, sondern eine schachbrettartige Anordnung von Bindungspunkten mit oben liegendem Kettfaden und Bindungspunkten mit oben liegendem Schussfaden. Gewebe mit Satinbindung bzw. Atlasbindung sind dagegen durch vereinzelt liegende Bindungspunkte gekennzeichnet, so dass sich auch hier keine durchgehenden diagonalen Riefen und Grate ausbilden können. Daher bilden diese Gewebe kein bevorzugtes Ausgangsmaterial für die Herstellung der erfindungsgemäßen Reibmaterialien, es ist jedoch möglich, diesen Geweben im imprägnierten Zustand eine geeignete Oberflächenstruktur aufzuprägen, wie weiter unten erläutert wird.

Die Fäden für die Gewebeherstellung bestehen entweder aus Polyacrylnitril (PAN)-Fasern, die bereits thermisch stabilisiert worden sind, oder ein Gewebe aus PAN-Fasern wird vor der Carbonisierung einer thermischen Stabilisierung unterzogen. Bei der thermischen Stabilisierung werden die PAN-Fasern durch Luftoxidation bei vorzugsweise 200-400 °C unter Streckung in eine unschmelzbare Form überführt. Für die Herstellung des obengenannten Gewebes haben sich Garne, gesponnen aus streckgerissenen oxidierten Polyacrylnitrilfasern als besonders geeignet erwiesen. Der Garntiter liegt zwischen 120 und 170 tex. Bevorzugt werden gedrehte Garne verwendet, und besonders bevorzugt Zwirne, die durch Verdrehung zweier gegenläufig verdrehter Fäden erhalten werden, oder durch Verdrehung mehrerer Zwirnfäden miteinander erhaltene Fäden. Ein wesentlicher Vorteil dieser gedrehten Fäden besteht darin, dass die einzelnen Fasern sich bei Einwirkung von Druck nicht nebeneinander in der Ebene flach legen können, die Fäden also immer eine gewisse räumliche Struktur aufweisen.

Anschließend wird das Gewebe carbonisiert, d.h. bei einer Temperatur zwischen 900 und 2500 °C unter Luftabschluss thermisch behandelt. Es ist vorteilhafter, erst das Gewebe herzustellen und dieses dann als Ganzes zu carbonisieren, als ein Gewebe aus Fäden aus bereits carbonisierten Fasern herzustellen, denn Carbonfasern sind wesentlich steifer und spröder als die Ausgangsfasern. Während der Carbonisierung steigt der Kohlenstoffgehalt der Fasern durch Abgabe von Wasserstoff, Sauerstoff und Heteroatomen, insbesondere von Stickstoff, und der Vernetzungsgrad des Kohlenstoffgerüsts in den Filamenten vergrößert sich. Erfolgt die thermische Behandlung bei 1000 °C, so wird ein massebezogener Kohlenstoffgehalt von ca. 80 % erhalten, bei höheren Temperaturen wird ein noch höherer Kohlenstoffgehalt erreicht. Beispielsweise wird ein massebezogener Kohlenstoffgehalt von 95 % erhalten, wenn die thermische Behandlung bei 1800 °C erfolgt. Für den oben genannten Bereich von Carbonisierungstemperaturen gilt in grober Näherung: Je höher die Behandlungstemperatur, desto größer der Kohlenstoffgehalt der Fasern und desto höher sind die thermische Stabilität und der Elastizitätsmodul des Materials.

In einem folgenden Prozessschritt wird das Gewebe mit einem Binder, vorzugsweise mit Harz getränkt/imprägniert. Bevorzugt werden Phenolharze verwendet, die als Flüssigharz oder als Schmelze (hot melt resin) zur Anwendung kommen. Auf diese Weise wird ein Prepreg erhalten, d.h. ein mit Kunststoff (Harz) imprägnierter flächiger Faserstoff, dessen Kunststoffimprägnierung noch nicht ausgehärtet ist.

Die Prozessschritte der thermischen Behandlung und des Imprägnierens werden bevorzugt kontinuierlich ausgeführt, d.h. das Gewebe wird von einer Rolle abgerollt, durch einen oder mehrere Öfen mit der entsprechenden Temperatur und Atmosphäre geführt und anschließend durch ein Harzbad, einen Walzenkalander oder eine andere Imprägniervorrichtung geführt. Anschließend wird das Harz ausgehärtet, so dass ein Verbundwerkstoff erhalten wird, dessen Kunststoffmatrix durch das Carbonfasergewebe verstärkt ist (Carbonfaserverstärkter Kunststoff CFK). Dieser Prozess kann sowohl auf kontinuierliche als auch auf diskontinuierliche Weise durchgeführt werden.

Das Harz erfüllt in dem erfindungsgemäßen Reibmaterial mehrere Funktionen. Zunächst wirkt es als Binder, der die Fäden des Gewebes aneinander bindet und in ihrer Lage im Gewebe fixiert. Bei niedrigen Harzgehalten sind die Faserstränge nur mit einem oberflächlichen Harzfilm überzogen, bei höheren Harzgehalten jedoch in einer dicken Harzmatrix eingebettet und damit auch vor mechanischen Beanspruchungen, beispielsweise durch Reibung geschützt. Außerdem wird durch den Binderzusatz das Gewebe mechanisch verstärkt, d.h. es wird steifer und seine Kompressiblität verringert sich.

Weiterhin vermindert die Harzimprägnierung die Durchlässigkeit des Gewebes für Öl und damit den Ölfluss quer zur Oberfläche des Reibmaterials. Ein vollständiger Abfluss des Öls ins Innere des Reibmaterials ist unerwünscht, da das Öl an der mit dem Gegenstück der Reibeinrichtung in Reibkontakt stehenden Oberfläche des Reibmaterials benötigt wird, um die Reibungswärme aufzunehmen und entlang der Riefen oder kanalartigen Vertiefungen seitlich abzuführen. Andererseits glättet der Harzfilm die Oberfläche der einzelnen Faserstränge und der gesamten Gewebestruktur. Jedoch muss durch eine entsprechende Dosierung des Harzes verhindert werden, dass die vorteilhafte, aus Graten und Riefen bestehende Struktur des Gewebes völlig nivelliert wird.

Das mit Harz imprägnierte Gewebe 1 wird mit Hilfe eines in Fig.4 gezeigten Presswerkzeugs 2, bestehend aus Pressstempel 4 und Pressmatrize 6 unter einem Pressdruck von vorzugsweise 4 - 8·10⁵ Pa und einer Aushärtetemperatur von beispielsweise 50 -180 °C gepresst, wobei das Prepreg 1 vor dem Pressen beidseitig mit je einer Trennfolie 8 belegt wird. Die Trennfolien 8 werden nach der Entnahme des Prepregs aus dem Presswerkzeug 2 von der Oberfläche des Prepregs 1 abgezogen. Die Wahl der Aushärtetemperatur innerhalb des angegebenen Bereichs richtet sich nach der Art des Harzes.

Diese Maßnahmen bewirken zum einen das Aushärten des Harzes, zum andern wird das imprägnierte Gewebe auf die gewünschte Dicke verdichtet. Typische Dicken von Reibmaterialien für Anwendungen im automobilen Bereich liegen zwischen 0,2 bis 0,7 mm mit Dickentoleranzen von ± 10 %. Die weiteren Vorteile, welche sich aus der Verpressung des Prepregs ergeben, sind bereits weiter oben ausführlich dargestellt worden.

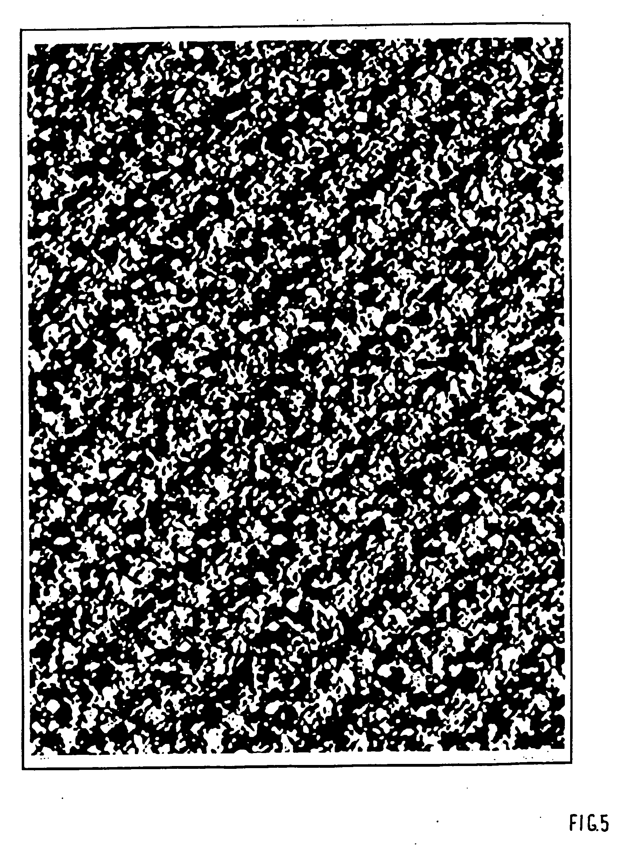

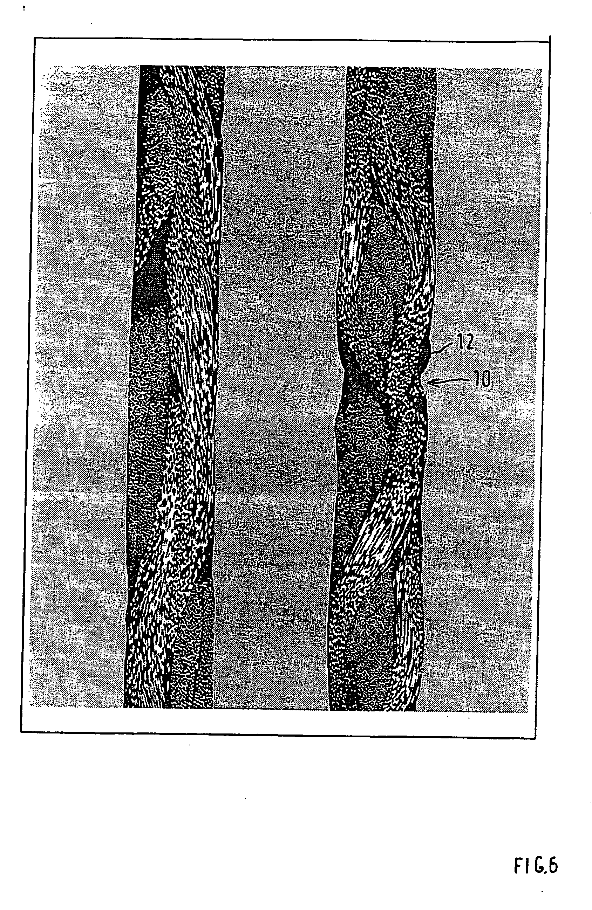

Es hat sich überraschend gezeigt, dass auch nach dem Pressvorgang die ursprüngliche Struktur des Gewebes aus Graten und Riefen noch erkennbar erhalten ist. Dies ist in Fig.5 zu erkennen, welche ein verpresstes imprägniertes Gewebe mit einem massebezogenen Harzgehalt von 50 % zeigt. Obwohl die Höhenunterschiede zwischen Graten und Riefen offensichtlich weniger stark ausgeprägt sind als im Ausgangsmaterial (Fig. 1), sind noch die diagonalen Vertiefungen des Gewebes erkennbar. Betrachtet man das Material bei einer höheren Vergrößerung (Fig.6), so zeigt sich, dass die Fasern weitgehend in eine Harzmatrix eingebettet sind, jedoch die kanalartigen Vertiefungen 10 und die aus der Ebene herausragenden Grate 12 des Gewebes noch vorhanden sind. Aufgrund der hohen Vergrößerung ist in Fig.6 nur eine solche Vertiefung 10 und ein solcher Grat 12 zu erkennen, während die benachbarten Vertiefungen und Grate bereits außerhalb der Bildfläche liegen.

Es hat sich gezeigt, dass der Harzgehalt dazu beiträgt, die vorteilhafte Struktur des ursprünglichen Gewebes auch nach der Imprägnierung und nach dem Pressprozess zu erhalten. Einerseits muss der Harzgehalt ausreichend hoch sein, um die mechanische Stabilität und Steifigkeit des Prepregs zu gewährleisten, die Kompressiblität herabzusetzen und die Ölpermeabilität des Reibmaterials zu reduzieren, andererseits darf der Harzgehalt nicht so groß sein, dass die Graten- und Riefenstruktur durch vollständiges Umschließen mit einer dicken Harzschicht völlig eingeebnet wird.

Es hat sich herausgestellt, dass bei einem massebezogenen Harzanteil im Bereich von 25 bis 50 % die Reibmaterialien auch nach dem Verpressen unter den o.g. Bedingungen noch eine für den Ölfluss geeignete Riefenstruktur aufweisen. Die Rauhigkeiten R_{z} dieser Oberflächen betragen ca. 30 bis 50 µm, wodurch das erfindungsgemäße Reibmaterial wenig zur Bildung hydrodynamischer Filmen neigt, die bei Nassreibelementen unerwünscht sind.

Der Einfluss des Harzgehalts und der Druckbeaufschlagung beim Härten des Harzes auf verschiedene Parameter des Materials, wie die Rauhigkeit R_{z}, die Luftdurchlässigkeit und die Porengrößenverteilung des Reibmaterials, kann aus den in Tabelle 1 zusammengestellten Messwerten entnommen werden. Mittels Kapillar-Durchflussporometrie wurde die Porengrößenverteilung durch Messung eines Gasflusses durch das Reibmaterial ermittelt. Hierzu werden der Durchfluss an einer trockenen Probe und an einer mit Flüssigkeit benetzten Probe als Funktion des angelegten Gasdrucks gemessen. Entscheidend für die Porengröße ist die Nassmessung. Je höher der Gasdruck, um so enger sind die Poren, aus denen die Flüssigkeit verdrängt wird. Mit Hilfe der Washburn-Gleichung kann dann unter der Annahme idealer Benetzung die Porengröße aus dem Differenzdruck errechnet werden. Das Verhältnis Trockendurchfluss/Nassdurchfluss, der sogenannte Filter Flow, gibt eine Aussage über die Häufigkeit der Poren, so dass dann z.B. ein mittlerer Porendurchmesser angegeben werden kann. Dabei ist der sog. bubble point der Punkt, an dem der angelegte Gasdruck erstmals ausreicht, um einen Durchfluss zu erzeugen.

Im Ergebnis ist festzustellen, dass die Rauhigkeit R_{z} des Reibmaterials durch den Pressvorgang und mit zunehmendem Harzgehalt abnimmt. Außerdem verringern sich mit zunehmendem Harzgehalt die Durchlässigkeit des Reibmaterials für Luft und die Breite der Porengrößenverteilung, wobei dies besonders auf Kosten der kleinen Poren geht. In grober Näherung ist davon auszugehen, dass mit der Luftdurchlässigkeit auch die Ölpermeabilität abnimmt. Dies ist von Vorteil, weil dann mehr Öl an der Reiboberfläche zur Verfügung steht.

Im Ergebnis des Pressprozesses verringert sich auch die Breite der Porengrößenverteilung, wobei mit zunehmendem Harzgehalt insbesondere die zur Mikrotextur des Materials gehörigen kleinen Poren und Zwischenräume zwischen den einzelnen Fasern verschlossen werden, während die Makrotextur weniger stark beeinträchtigt wird.

**Tabelle 1 : Materialparameter des Reibmaterials**

| | R_{z} [µm] | | Luftdurchlässigkeit / [cm³/s] | Porengrößenverteilung (Messung mit Kapillarflussporometer) | | | |
|---|---|---|---|---|---|---|---|
| | längs | quer | Differenzdruck=0,3 bar Fläche =3,46 cm² | bubble point/[µm] | d₉₀/ [µm] | d₅₀/ [µM] | d₁₀/ [µm] |
| Reibmaterial 50 Gew.-% Harzgehalt, unverpresst | 70 | 50 | 2000 | 200 | 100 | 62 | 20 |
| Reibmaterial 50 Gew.-% Harzgehalt, verpresst | 30 | 32 | 600 | 127 | 90 | 42 | 18 |
| Reibmaterial 25 Gew.-% Harzgehalt, verpresst | 38 | 48 | 1300 | 135 | 60 | 20 | 4 |

Gemäß einem anderen Verfahren, das im Folgenden beschreiben wird, kann ein vorteilhaftes Reibmaterial erhalten werden, indem ein Gewebe ohne oder mit nur sehr geringer Grat- und Riefenstruktur in der oben beschriebenen Weise carbonisiert und mit Harz imprägniert wird und das so erhaltene Prepreg 1 im Laufe des Pressvorgangs strukturiert wird (Fig.6). Dies kann mit einem strukturierten Pressstempel 4 geschehen, oder die beim Pressvorgang üblicherweise zwischen Pressstempel 4 und Prepreg 1 eingelegten Trennfolien 8 oder Trennpapiere werden an ihrer dem Prepreg 1 zugewandten Seite beispielsweise durch einen Prägeprozess mit einer Struktur versehen, die dem Negativ der auf dem Prepreg 1 herzustellenden Struktur entspricht, und diese Struktur wird dann in das noch fließfähige Harz übertragen. Die einzupressende Struktur beinhaltet die bereits oben beschriebenen, vorzugsweise sich über die gesamte Oberfläche durchgehend erstreckenden Vertiefungen, welche oberflächliche Ölkanale bilden.

Bevorzugt wird nur die als Reiboberfläche vorhergesehene Oberfläche des Prepregs 1 mit einer Grat- und Riefenstruktur versehen, während auf der für die Verbindung mit dem Substrat vorgesehenen Rückseite zweckmäßigerweise die glatte, für das Aufkleben besser geeignete Ausgangsstruktur belassen wird.

Für diese Variante ist es vorteilhaft, wenn die Fäden im Gewebe noch eine gewisse Flexibilität besitzen, das Gewebe also eine eher lockere Bindung hat, und sich in ihrer Anordnung an das einzupressende Muster anpassen können. Anderenfalls würde die Formgebung sich nur auf die Harzbeschichtung des Gewebes auswirken, und es würde Grate entstehen, die nur Harz enthalten, aber kaum oder keine Fasern. Da nur die hervorstehenden Grate 12 in Reibkontakt mit dem Gegenstück treten, kämen in diesem Fall die vorteilhaften Reibeigenschaften der Fasern nicht zur Wirkung.

Nach dem Pressen und Aushärten ist das Reibmaterial einsatzfertig und kann mittels eines geeigneten, d.h. wärme- und ölbeständigen Klebemittel auf der Reiboberfläche eines Substrats, beispielsweise einer Kupplungsscheibe oder einem Synchronring, befestigt werden. Bei einseitig strukturierten Materialien wird zweckmäßigerweise die glattere Seite, welche eine größere geschlossene Adhäsionsfläche aufweist, über das Klebemittel mit dem Substrat verbunden, während die Oberfläche mit der Grat- und Riefenstruktur als Reibfläche wirkt.

Gemäß einer weiteren Ausführungsform wird der Harzanteil des Reibmaterials teilweise oder vollständig carbonisiert, beispielsweise durch eine Festphasenpyrolyse in inerter Atmosphäre bei 800 - 1500 °C in Kohlenstoff umgewandelt. Damit ergibt sich ein Verbundwerkstoff, dessen Matrix aus Kohlenstoff besteht und mit einem Carbonfasergewebe verstärkt wird (Carbonfaserverstärkter Kohlenstoff "CFC"). Bei der Carbonisierung schrumpft die Harzschicht infolge des Masseverlustes durch die Abspaltung flüchtiger Bestandteile. Daher wird die in Fig. 5 und 6 gezeigte Struktur des ausgehärteten und gepressten Reibmaterials, in der die Riefen teilweise mit Harz gefüllt sind und der Höhenunterschied zwischen Graten und Riefen im Vergleich zum Ausgangsgewebe verringert ist, aufgebrochen, d.h. die ursprüngliche Grat- und Riefenstruktur des Gewebes tritt wieder mehr hervor. Die endgültige Struktur lässt sich hinsichtlich ihres Füllungsgrades variieren, indem das CFC-Material nach der Carbonisierung ggf. erneut mit Harz imprägniert und das Harz ausgehärtet und carbonisiert wird. Ggf. wird nach dem letzten Carbonisierungsprozess nochmals eine Harzimprägnierung vorgenommen, die anschließend nur gehärtet, jedoch nicht carbonisiert wird.

Eine weitere Möglichkeit, den Füllgrad der Poren des Reibmaterials zu variieren, besteht darin, dem Imprägnierharz Partikel aus Graphit oder Ruß zuzusetzen, die während der Carbonisation nicht schrumpfen.

Carbonfaserverstärkte Kohlenstoffmaterialien zeichnen sich insbesondere durch ihre hohe Temperaturbeständigkeit aus, da sie nahezu keine thermisch abbaubaren Bestandteile mehr enthalten. Ein weiteres herausragendes Merkmal ist die hohe mechanische Stabilität und Steifigkeit und die daraus resultierende hohe Belastbarkeit des Materials auch bei wechselnder Belastungsstärke. Diese vorteilhaften Eigenschaften verbinden sich mit einem geringen spezifischen Gewicht. Carbonfaserverstärkte Kohlenstoffe sind leichter als die zu ihrer Herstellung als Precursoren eingesetzten carbonfaserverstärkten Kunststoffe, da die Pyrolyse des Harzes mit einem Massenverlust verbunden ist.

Aus der vorstehenden Beschreibung geht hervor, dass sich mit dem erfindungsgemäßen Verfahren eine große Vielfalt an Reibmaterialien herstellen lässt, mit für die beabsichtigte Anwendung maßgeschneiderter Zusammensetzung und Feinstruktur. Gemeinsames Merkmal aller bevorzugten Reibmaterialien ist die Grat- und Riefenstruktur, die für die Ölabfuhr in vergleichbar vorteilhafter Weise wirkt wie die gefrästen Ölriefen an Reibmaterialien des Stands der Technik.

### Bevorzugtes Ausführungsbeispiel

Ausgangsmaterial für das Reibmaterial bildete ein Gewebe mit Köperbindung 2/2 diagonal verlaufenden, kanalartigen Vertiefungen gemäß Fig.1 und Fig.2. Dieses Gewebe wurde mit einem Resol-Flüssigharzsystem derart imprägniert, dass der Harzgehalt an der Gesamtmasse 50 % beträgt. Der Aushärtevorgang des auf diese Weise erzeugten Prepreg wurde mit einer Behandlung bei einer Temperatur von ca. 80 °C über einen Zeitraum von ca. 50 min begonnen. Das Aufbringen des Pressdrucks im Rahmen des mechanischen Pressvorgangs gemäß Fig.4 erfolgte in zwei Stufen, wobei eine erste ca. 10-minütige Pressstufe ca. 50 min nach Beginn des Aushärtevorgangs begonnen und unter einem Pressdruck von ca. 4·10⁵ Pa stattfand, während für die sich anschließende zweite Pressstufe der Pressdruck auf ca. 7·10⁵ Pa erhöht wurde, wobei die zweite Pressstufe ca. 65 min dauerte. Vorzugsweise gleichzeitig mit dem Beginn der ersten Pressstufe wurde die Aushärtetemperatur derart gesteigert, dass sie kurz vor Beginn der zweiten Pressstufe etwa 130 °C erreichte. Im Laufe der zweiten Pressstufe wurde dann die Aushärtetemperatur nochmals gesteigert, vorzugsweise auf ca. 150 °C. Mit dem Absenken der Aushärtetemperatur auf Umgebungstemperatur endete auch die zweite Pressstufe mit dem Absenken des Pressdrucks auf Umgebungsdruck etwa gleichzeitig. Der gesamte Aushärtezeitraum zwischen dem Beginn der Erhöhung der Aushärtetemperatur und deren Absenken auf die Umgebungstemperatur betrug ca. 125 min.

Zusammenfassend wurde folglich der mechanische Pressvorgang zeitversetzt nach dem Beginn des Aushärtezeitraums, d.h. an einem Zeitpunkt innerhalb des Aushärtezeitraums begonnen und im wesentlichen zeitgleich mit dem Ende des Aushärtezeitraums beendet. Ergebnis war ein Reibmaterial gemäß Fig.5 und Fig.6, bei welchem die ursprüngliche Struktur des Gewebes aus Graten und Riefen noch erkennbar erhalten ist und welches die Materialparameter gemäß Zeile 2 in Tabelle 1 aufweist.

Alternativ könnte mit dem mechanischen Pressvorgang des Prepregs auch bereits vor dem Beginn des Aushärtezeitraums begonnen und der Pressvorgang an einem beliebigen Zeitpunkt innerhalb des Aushärtezeitraums oder auch an dessen Ende beendet werden. Möglich ist auch, den Pressvorgang vor Beginn des Aushärtezeitraums zu beginnen und zu beenden.

### Vergleich mit unverpresster Probe

Um die Unterschiede der Materialeigenschaften zwischen sechs nach dem oben beschriebenen bevorzugten Verfahren hergestellten Proben und einer den gleichen massebezogenen Harzanteil von 50% aufweisenden, aber demgegenüber unverpressten Probe festzustellen, wurden die Proben einer Kompressionsprüfung sowie einer Rückfederungsprüfung nach der Prüfnorm ASTM F 36-66 unterzogen. Nach dieser Norm wird die Dicke a einer jeden Probe zunächst im unbelasteten Zustand, nach 15 s Belastung mit 22,2 N (5 1bf), unter welcher sich eine Dicke p einstellt, nach weiteren 60s Belastung mit 1112 N (250 1bf), unter welcher sich eine Dicke m einstellt und nach weiteren 15 s Belastung mit 22,2 N (5 1bf) gemessen, unter welcher sich eine Dicke r einstellt (siehe Tabelle 2).

**Tabelle 2 : Kompressibilität und Rückfederung des Reibmaterials**

| | Dicke (a) | Dicke (p) | Dicke (m) | Dicke (r) | Kompressibilität | Kompressi bilität | Rückfederung | Rückfederung |
|---|---|---|---|---|---|---|---|---|
| Probe Nr. | Mm | mm | mm | mm | µm | % | µm | % |
| 1 | 0,313 | 0,310 | 0,284 | 0,306 | 26,2 | 8,4 | 21,9 | 83,6 |
| 2 | 0,311 | 0,308 | 0,280 | 0,304 | 27,4 | 8,9 | 23,6 | 86,1 |
| 3 | 0,297 | 0,294 | 0,267 | 0,290 | 27,0 | 9,2 | 23,1 | 85,4 |
| 4 | 0,295 | 0,291 | 0,266 | 0,287 | 25,1 | 8,6 | 21,0 | 83,7 |
| 5 | 0,293 | 0,291 | 0,265 | 0,286 | 25,4 | 8,7 | 21,0 | 82,5 |
| 6 | 0,288 | 0,286 | 0,261 | 0,282 | 24,7 | 8,6 | 20,2 | 81,6 |

Aus den gemessenen Dicken p und m der Proben wurde die Kompressibilität in µm bestimmt, welche der Differenz zwischen der Dicke p nach 15 s Belastung bei 22,2 N und der Dicke m nach 60 s Belastung bei 1112 N entspricht. Die relative Kompressibilität in % wurde anschließend aus dem Verhältnis der Kompression zur Dicke p bestimmt.

Weiterhin wurde auch die Rückfederung der Proben in µm berechnet, welche der Differenz zwischen der Dicke r und der Dicke p entspricht. Schließlich wurde die relative Rückfederung in % aus dem Verhältnis der Rückfederung zur Kompressibilität berechnet.

Im Ergebnis ist festzustellen, dass die relative Kompressibilität der nicht unter Druck ausgehärteten Probe 55,6 % betrug, deren relative Rückfederung 20,4%. Demgegenüber betrug die relative Kompressibilität der entsprechend dem vorgegebenem Druck/Temperaturregime ausgehärteten sechs Proben nur zwischen 8,4 % und 9,2%, die relative Rückfederung zwischen 81,6 % und 86,1 %. Vorzugsweise beträgt die relative Kompressibilität des Reibmaterials gemäß der Erfindung zwischen 8 % und 10 % und seine relative Rückfederung zwischen 80 % und 90 %. Daraus folgt, dass das erfindungsgemäße, d.h. unter Druck ausgehärtete Reibmaterial bei Druckbelastung wesentlich formstabiler ist.

## Patentansprüche

1. Verfahren zur Herstellung eines auf einem flächigen Carbonfaser-Gewebe basierenden Reibmaterials für Nassreibelemente wie Kupplungsbeläge oder Synchronringbeläge, beinhaltend das Imprägnieren des Carbonfaser-Gewebes mit einem Binder zur Ausbildung eines mit Binder imprägnierten Faserstoffs (Prepreg),
wobei das Prepreg (1) während eines Aushärtezeitraums unter einer gegenüber der Umgebungstemperatur erhöhten Aushärtetemperatur ausgehärtet und vor Beginn und/oder zumindest während eines Teils des Aushärtezeitraums an seinen Oberflächen mittels eines Presswerkzeugs (2) mechanisch gepresst wird, und wobei
zur Herstellung des Carbonfaser-Gewebes Fäden aus thermisch stabilisierten Polyacrylnitril-Fasern zu einem Gewebe verwoben werden oder Fäden aus Polyacrylnitril-Fasern zu einem Gewebe verwoben werden, das thermisch stabilisiert wird, und das Gewebe anschließend carbonisiert wird, und wobei die Fäden derart miteinander verwebt werden, dass auf wenigstens einer Oberfläche des Gewebes kanalartige Vertiefungen (10) vorhanden sind.

2. Verfahren nach Anspruch 1, **dadurch gekennzeichnet, dass** der Pressdruck in einem Bereich zwischen 4 und 8 · 10⁵ Pa liegt.

3. Verfahren nach Anspruch 1 oder 2, **dadurch gekennzeichnet, dass** der Anteil des Binders an der Gesamtmasse des Reibmaterials in einem Bereich zwischen 25 bis 50 Gew.-% liegt.

4. Verfahren nach wenigstens einem der vorhergehenden Ansprüche, **dadurch gekennzeichnet, dass** die Aushärtetemperatur in einem Bereich zwischen 50 bis 180°C liegt.

5. Verfahren nach wenigstens einem der vorhergehenden Ansprüche, **dadurch gekennzeichnet, dass** als Binder Phenolharze verwendet werden.

6. Verfahren nach wenigstens einem der vorhergehenden Ansprüche, **dadurch gekennzeichnet, dass** das Prepreg (1) vor dem Pressen beidseitig mit je einer Trennfolie (8) belegt wird.

7. Verfahren nach wenigstens einem der vorhergehenden Ansprüche, **dadurch gekennzeichnet, dass** das Gewebe derart gewoben wird, dass es eine Köper-Bindung aufweist.

8. Verfahren nach wenigstens einem der vorhergehenden Ansprüche, **dadurch gekennzeichnet, dass** das Pressen mit einem Presswerkzeug (2) elfolgt, dessen dem Prepreg (1) zugewandte Oberflächen glatt sind.

9. Verfahren nach wenigstens einem der vorhergehenden Ansprüche, **dadurch gekennzeichnet, dass** dem Binder Partikel aus Graphit oder Ruß zugesetzt werden.

10. Verfahren nach wenigstens einem der vorhergehenden Ansprüche, **dadurch gekennzeichnet, dass** der Binder teilweise oder vollständig carbonisiert wird.

11. Verfahren nach wenigstens einem der vorhergehenden Ansprüche, **dadurch gekennzeichnet, dass** der Pressvorgang des Prepregs zeitversetzt nach dem Beginn des Aushärtezeitraums begonnen und im wesentlichen zeitgleich mit dem Ende des Aushärtezeitraums beendet wird.

12. Auf einem flächigen Carbonfaser-Gewebe basierendes Reibmaterial für Nassreibelemente, hergestellt nach einem Verfahren nach wenigstens einem der vorhergehenden Ansprüche, wobei das Carbonfaser-Gewebe kanalartige Vertiefungen aufweist.

## Claims

1. Process for producing a friction material based on a sheet-like woven carbon fibre fabric for wet friction elements such as clutch windings or synchronizing ring linings, which comprises impregnating the woven carbon fibre fabric with a binder to form a fibre material impregnated with binder (prepreg),
wherein the prepreg (1) is cured during a curing time at a curing temperature which is higher than ambient temperature and before commencement of and/or at least during part of the curing time is mechanically pressed on its surfaces by means of a pressing tool (2) and
to produce the woven carbon fibre fabric, threads of thermally stabilized polyacrylonitrile fibres are woven to give a woven fabric or threads of polyacrylonitrile fibres are woven to give a woven fabric which is thermally stabilized and the woven fabric is subsequently carbonized and
the threads are interwoven in such a way that channel-like depressions (10) are present on at least one surface of the woven fabric.

2. Process according to Claim 1, **characterized in that** the pressing pressure is in the range from 4 to 8 × 10⁵ Pa.

3. Process according to Claim 1 or 2, **characterized in that** the proportion of binder based on the total mass of the friction material is in the range from 25 to 50% by weight.

4. Process according to at least one of the preceding claims, **characterized in that** the curing temperature is in the range from 50 to 180°C.

5. Process according to at least one of the preceding claims, **characterized in that** phenolic resins are used as binder.

6. Process according to at least one of the preceding claims, **characterized in that** the prepreg (1) is covered on each side with a release film (8).

7. Process according to at least one of the preceding claims, **characterized in that** the woven fabric is woven in such a way that it has a twill construction.

8. Process according to at least one of the preceding claims, **characterized in that** pressing is carried out by means of a pressing tool (2) whose surfaces facing the prepreg (1) are smooth.

9. Process according to at least one of the preceding claims, **characterized in that** particles of graphite or carbon black are added to the binder.

10. Process according to at least one of the preceding claims, **characterized in that** the binder is partially or completely carbonized.

11. Process according to at least one of the preceding claims, **characterized in that** the pressing of the prepreg is commenced after a delay time after commencement of the curing time and is ended essentially simultaneously with the end of the curing time.

12. Friction material based on a sheet-like woven carbon fibre fabric for wet friction elements produced by a process according to at least one of the preceding claims, wherein the woven carbon fibre fabric has channel-like depressions.

## Revendications

1. Procédé pour la production d'un matériau de friction à base d'un tissu plat de fibres de carbone, pour éléments de friction humide tels que des garnitures d'embrayage ou des garnitures d'anneau de synchroniseur, comportant l'imprégnation du tissu de fibres de carbone avec un liant pour la formation d'une matière fibreuse imprégnée avec un liant (prépreg), dans lequel le prépreg (1) est durci pendant une période de durcissement au-dessous d'une température de durcissement élevée par rapport à la température ambiante et, avant le début et/ou au moins pendant une partie de la période de durcissement, est pressé mécaniquement sur ses surfaces au moyen d'un outil de pressage (2), et dans lequel,
pour la production du tissu de fibres de carbone, des fils à base de fibres de polyacrylonitrile stabilisées thermiquement sont tissés ensemble en un tissu ou des fils à base de fibres de polyacrylonitrile sont tissés ensemble en un tissu qu'on stabilise thermiquement, et ensuite on soumet le tissu à une carbonisation, et dans lequel les fils sont tissés entre eux de telle sorte que des évidements (10) de type canal sont présents sur au moins une surface du tissu.

2. Procédé selon la revendication 1, **caractérisé en ce que** la pression de pressage se situe dans une plage comprise entre 4 et 8.10⁵ Pa.

3. Procédé selon la revendication 1 ou 2, **caractérisé en ce que** la proportion du liant par rapport à la masse totale du matériau de friction se situe dans une plage comprise entre 25 et 50 % en poids.

4. Procédé selon au moins l'une des revendications précédentes, **caractérisé en ce que** la température de durcissement se situe dans une plage comprise entre 50 et 180 °C.

5. Procédé selon au moins l'une des revendications précédentes, **caractérisé en ce qu'**on utilise comme liant des résines phénoliques.

6. Procédé selon au moins l'une des revendications précédentes, **caractérisé en ce qu'**avant le pressage, on recouvre le prépreg (1) sur les deux faces avec chacune un film séparateur (8).

7. Procédé selon au moins l'une des revendications précédentes, **caractérisé en ce que** le tissu est tissé de manière à présenter une armure sergé.

8. Procédé selon au moins l'une des revendications précédentes, **caractérisé en ce que** le pressage s'effectue au moyen d'un outil de pressage (2) dont les surfaces tournées vers le prépreg (1) sont lisses.

9. Procédé selon au moins l'une des revendications précédentes, **caractérisé en ce qu'**on ajoute au liant des particules de graphite ou de noir de carbone.

10. Procédé selon au moins l'une des revendications précédentes, **caractérisé en ce que** le liant est partiellement ou totalement carbonisé.

11. Procédé selon au moins l'une des revendications précédentes, **caractérisé en ce que** l'opération de pressage du prépreg débute en étant décalée après le début de la période de durcissement et se termine pratiquement en même temps que la fin de la période de durcissement.

12. Matériau de friction à base d'un tissu plat de fibres de carbone, pour éléments de friction humide, produit conformément au procédé selon au moins l'une des revendications précédentes, dans lequel le tissu de fibres de carbone comporte des évidements de type canal.
